# EUROPÄISCHE PATENTSCHRIFT

(11) **EP 0 697 913 B1**
(45) Veröffentlichungstag und Bekanntmachung des Hinweises auf die Patenterteilung: **25.06.1997**
(21) Anmeldenummer: 94913478.7
(22) Anmeldetag: 29.04.1994
(51) Int. Cl.: B01J 35/02, B01J 35/04

(54) **PLATTENKATALYSATOR**
PLATE-TYPE CATALYTIC CONVERTER
CATALYSEUR A PLAQUES

(30) Priorität: 13.05.1993 DE 4316132; 13.05.1993 DE 4316131
(43) Veröffentlichungstag der Anmeldung: 28.02.1996
(73) Patentinhaber: SIEMENS AKTIENGESELLSCHAFT, 80333 München (DE)
(72) Erfinder: HÜTTENHOFER, Klaus, D-90562 Heroldsberg (DE); BEER, Josef-Konrad, D-91301 Forchheim (DE); FRIEDE, Heimo, D-91054 Erlangen (DE); LAMMERS, Hendrik, D-90491 Nürnberg (DE)
(86) Internationale Anmeldenummer: DE9400476
(87) Internationale Veröffentlichungsnummer: WO9426411

(56) Entgegenhaltungen:
- EP-A- 0 186 801
- WO-A-91/01178
- DE-A- 2 853 023
- DE-U- 8 901 773
- GB-A- 2 001 547
- GB-A- 2 079 174
- US-A- 3 839 535

## Beschreibung

Die Erfindung bezieht sich auf einen Plattenkatalysator, der mehrere in einer Halterungsvorrichtung angeordnete und mit einer katalytisch aktiven Masse beschichtete Platten umfaßt.

Solche Plattenkatalysatoren werden unter anderem zur Verringerung von in einem Gasgemisch enthaltenen Stickoxiden verwendet. Hierbei werden die Stickoxide zusammen mit einem zuvor in das Gasgemisch eingebrachten Reduktionsmittel, meist Ammoniak NH₃, nach dem Verfahren der selektiven katalytischen Reduktion (SCR) durch die Kontaktierung an der katalytisch aktiven Masse zu Wasser und Stickstoff umgesetzt. Die katalytisch aktive Masse, mit der die Platten beidseitig beschichtet sind, umfaßt dabei meist Titandioxid und einen oder mehrere der Zusätze Wolframtrioxid, Molybdäntrioxid und Vanadinpentoxid. Beispiele für Katalysatoren dieser Art finden sich beispielsweise in der DE-PS 24 58 888.

Ein Plattenkatalysator umfaßt als Halterungsvorrichtung für die mit der katalytisch aktiven Masse beschichteten Platten meist einen sogenannten Elementkasten, in den die Katalysatorplatten gleichmäßig beabstandet und parallel zueinander orientiert eingesetzt sind. Der Elementkasten hat dabei meist die Form eines Quaders, der auf den Stirnseiten offen ist. Die Stirnseiten sind die An- und Abstromseiten für ein Strömungsmedium, z. B. das oben genannten Gasgemisch. Die Ebenen der Katalysatorplatten sind dabei senkrecht zu den Ebenen der Stirnseiten orientiert. Die Hauptströmungsrichtung für das Gasgemisch ist parallel zu den Kanten des Elementkastens orientiert, die gegenüberliegende Stirnseiten miteinander verbinden.

Mehrere dieser mit katalytisch aktiven Platten bestückte Elementkästen werden in einem Modul zusammengefaßt, und mehrere Module bilden eine Ebene von Plattenkatalysatoren. So hat beispielsweise eine sogenannte DeNOx-Anlage zur Verminderung der Stickoxide im Rauchgas einer Verbrennungsanlage meist 3 - 5 Ebenen solcher Plattenkatalysatoren.

Zur Beabstandung der Platten in einem Elementkasten weisen die Platten meist eingeprägte Sicken auf, die parallel zur Hauptströmungsrichtung verlaufen und den Raum zwischen zwei unmittelbar benachbarten Platten in mehrere Unterräume unterteilen. Diese Unterräume werden im wesentlichen laminar von dem Strömungsmedium durchströmt, so daß sich bei fortschreitender Durchströmungsstrecke des Plattenkatalysators in den Unterräumen ein für die katalytische Umsetzung, beispielsweise der Stickoxide mit Ammoniak, zunehmend unvorteilhafter werdendes Strömungsprofil und eine inhomogener werdende Gasverteilung aufgrund einer mangelhaften Durchmischung der Komponenten des Gasgemisches ergibt.

Zur Verbesserung dieser Verwirbelung sind bereits statische Mischer bekannt, die in Strömungsrichtung des Gasgemisches vor einem Plattenkatalysator angeordnet sind und dabei nachteiligerweise eine nicht unerhebliche Wegstrecke im Nachlaufgebiet des Mischers zur Verwirbelung der Komponenten des Strömungsmediums beanspruchen (vgl. DE-OS 41 23 161). Auch sind Katalysatoren mit einer eine hohe Verwirbelung erzielenden Kreuzkanalstruktur der Gaskanäle (Unterräume) bekannt. Diese Katalysatoren verursachen jedoch einen relativ hohen Druckabfall in einer Leitung für das Strömungsmedium und verstopfen bei stark staub- und partikelbeladenen Gasgemischen relativ schnell.

Außerdem sind aus dem deutschen Gebrauchsmuster G 89 01 773.0 bereits Katalysatorplatten mit Öffnungen bekannt, an denen sich jeweils zwei Laschen befinden, die gegensinnig von der betreffenden Katalysatorplatte weggebogen sind. Die Laschen sind so geformt und so dimensioniert, daß sie als Abstandshalter zu benachbarten Katalysatorplatten dienen. Die Biegekanten, an der diese Laschen von der betreffenden Katalysatorplatte weggebogen sind, sind parallel zur Hauptströmungsrichtung ausgerichtet, um die Strömung möglichst wenig zu behindern.

Der Erfindung liegt daher die Aufgabe zugrunde, einen Plattenkatalysator anzugeben, bei dem die katalytisch aktive Oberfläche besonders gleichmäßig und intensiv zur katalytischen Umsetzung, wie z. B. von in einem Rauchgas enthaltenen Stickoxiden, genutzt wird. Dabei ist es wünschenswert, wenn der Druckabfall möglichst gering ist und eine Verstopfung des Katalysators möglichst vermieden werden kann.

Diese Aufgabe wird erfindungsgemäß durch einen Plattenkatalysator mit den Merkmalen des Anspruchs 1 gelöst. Je zwei dieser Platten, die unmittelbar benachbart sind, und die seitliche Begrenzung der Haltevorrichtung definieren dabei jeweils einen Reaktionsraum, der auf der An- und der Abströmseite für das Strömungsmedium durchlässigen Halterungsvorrichtung begrenzt ist.

In dem Katalysator bilden sich Verwirbelungen, die das Strömungsmedium innerhalb eines jeden Reaktionsraums im Nachlaufgebiet der Verengung vermischen. Tragen die Plattenteile, an denen der Reaktionsraum verengt und daher das Strömungsmedium teilweise aus der Hauptströmung abgelenkt wird, außerdem Durchbrüche, die zu dem jeweils benachbarten Reaktionsraum führen, so wird auch eine teilweise Ablenkung des Strömungsmediums in benachbarte Reaktionsräume mit einer zusätzlichen Verwirbelung der Komponenten des Strömungsmediums und ein Stoffaustausch zwischen benachbarten Reaktionsräumen erreicht, der das gesamte Katalysatorvolumen erfaßt. Auf diese Weise werden die im Strömungsmedium enthaltenen Komponenten, beispielsweise Stickoxide und Ammoniak, besonders gut miteinander vermischt und werden besonders aufgrund ihrer Verwirbelung oft an die Oberfläche der Katalysatorplatten geführt. Weil das Strömungsmedium von diesen Mitteln jeweils immer nur zu einem Teil von der Hauptströmungsrichtung abgelenkt wird, ergibt sich ein relativ geringer Druckabfall. Weiterhin ergeben sich nur sehr begrenzte Bereiche, in denen sich im Strömungsmedium enthaltene Stäube und/oder Partikel ablagern können. Dadurch bleibt die Gefahr einer Verstopfung des Katalysators sehr gering.

Durch die erfindungsgemäße Lösung wird es erreicht, daß das Strömungsmedium in einem Reaktionsraum infolge seiner Ablenkung sowohl lokal als auch makroskopisch über den gesamten Reaktionsraum hinweg durchmischt wird, wodurch ebenso erreicht ist, daß die Komponenten des Strömungsmediums besonders häufig an die Oberfläche der mit der katalytisch aktiven Masse beschichteten Platten geführt werden. Auf diese Weise ist die Adsorptionswahrscheinlichkeit für die unerwünschten Komponenten des Strömungsmediums, beispielsweise Stickoxide und Ammoniak in einem Rauchgas, besonders hoch. Im besonderen für die katalytische Umsetzung von Stickoxiden mit Ammoniak ist die Adsorption der Stickoxide und des Ammoniaks besonders vorteilhaft für deren katalytische Reaktion an den aktiven Zentren der katalytischen Masse. Auf diese Weise bleibt auch die Sherwoodzahl, die ein Maß für einen von der Strömung induzierten Beitrag zur katalytischen Aktivität des Katalysators ist, entlang der Durchströmungsstrecke auf nahezu konstant hohem Niveau, was bedeutet, daß auch die katalytische Aktivität des Katalysators entlang der Durchströmungsstrecke weitgehend gleichmäßig und intensiv ausgenutzt wird. Dies steht im krassen Gegensatz zu den bisher üblichen, praktisch laminar durchströmten Katalysatoren, bei denen die Sherwoodzahl entlang der Durchströmungsstrecke absinkt. Dies führt zu hohen Abscheidegraden bei gleichzeitig vernachlässigbarem Druckverlust.

In direkter Weiterbildung der Erfindung schließt die von einem Wellental gebildete Linie, die die Richtung der Ablenkung bestimmt, mit der Hauptströmungsrichtung einen Winkel α ein, der vorzugsweise zwischen 20 und 160° liegt. Die Struktur einer mit Durchbrüchen versehenen Platte bildet also aus der Plattenebene ausgestellte Auslenkelemente, die so zur Hauptströmungsrichtung orientiert sind, daß in einem Vor- und einem Nachlaufgebiet dieser Auslenkelemente lokale Druckdifferenzen des Strömungsmediums erzeugt werden. Diese Druckdifferenzen bedingen sowohl eine Verwirbelung des Strömungsmediums in demselben Reaktionsraum als auch eine Vermischung des Strömungsmediums mit Teilen des Strömungsmedium aus benachbarten Reaktionsräumen durch die Durchtrittsöffnungen hindurch.

Diese Auslenkelemente sind vorzugsweise gegenüber der Plattenebene um einen Neigungswinkel β geneigt, der vorzugsweise zwischen 10 und 60° beträgt, und stellen dem Strömungsmedium Prallflächen entgegen, die aufgrund ihrer Neigung ein hohes Maß an Verwirbelung erzielen und dabei gleichzeitig nur einen relativ geringen Druckabfall verursachen.

Ein einfacher Aufbau des Plattenkatalysators ergibt sich, wenn die Plattenteile, die als Auslenkelemente wirken beabstandet sind. Auf diese Weise können große katalytisch aktive Oberflächen bezogen auf das Gesamtvolumen des Plattenkatalysators durch einfaches Aufeinanderstapeln der Katalysatorplatten in der Halterungsvorrichtung, vorzugsweise in einen Elementkasten, erreicht werden.

Die wellenförmige Struktur der Platte kann von einem wellenförmigen Profil in Form eines Sinusbogens gebildet werden. Es sind aber auch eine Rechtecks- oder Sägezahnschwingung oder eine Kombination dieser Formen möglich. Prinzipiell ist hier jede Struktur denkbar, die das Strömungsmedium immer wieder aus der Hauptströmungsrichtung auf turbulente Strömungsbahnen auslenkt.

Weitere vorteilhafte Ausgestaltungen der Erfindung sind den übrigen Unteransprüchen zu entnehmen.

Ausführungsbeispiele der Erfindung werden anhand der Zeichnung näher erläutert. Dabei zeigen:
- Figur 1: in perspektivischer und teilweise aufgebrochener Darstellung zwei aufeinandergestapelte Katalysatorplatten mit unterschiedlicher Struktur;
- Figur 2: eine teilweise aufgebrochene Aufsicht auf die Katalysatorplatten gemäß der Figur 1;
- Figur 3: einen Schnitt gemäß der Linie III-III in Figur 2;
- Figur 4: eine Aufsicht auf die Anströmseite eines Elementkastens, in den die Katalysatorplatten gemäß der Figuren 1 bis 3 aufeinandergestapelt eingebaut sind.

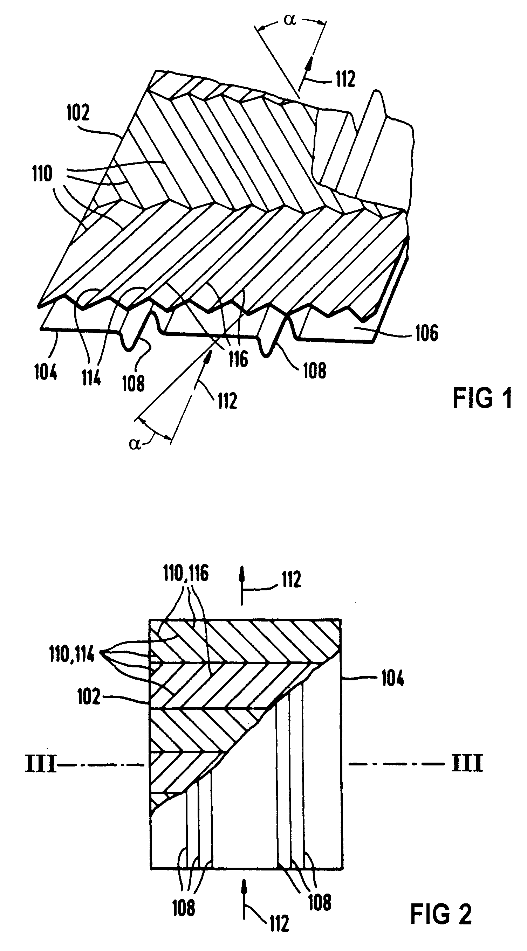

In den Figuren 1 bis 4 haben gleiche Teile gleiche Bezugszeichen.

Figur 1 zeigt in teilweise aufgebrochener perspektivischer Darstellung zwei unmittelbar übereinander angeordnete Katalysatorplatten 102, 104. Die Katalysatorplatten 102, 104 sowie alle in den weiteren Figuren nachfolgenden Katalysatorplatten sind beidseitig mit einer katalytisch aktiven Masse beschichtet, die jedoch aus Gründen der Übersichtlichkeit nicht weiter dargestellt ist. Von den Katalysatorplatten 102, 104 wird ein Reaktionsraum 106 begrenzt, der durch eine Struktur 108, 110 der Katalysatorplatten 104 bzw. 102 geformt ist. Dabei sind in die Katalysatorplatte 104 als Struktur Sicken 108 eingeprägt worden, die parallel zu einer Hauptströmungsrichtung 112 zwischen zwei Rändern der Platte 104 verlaufen. Die Ablenkung eines Strömungsmediums, das parallel zur Hauptströmungsrichtung 112 in den Reaktionsraum 106 einströmt, wird im wesentlichen durch eine kreuzkanalartige Struktur 110 der Katalysatorplatte 102 bewirkt.

Diese kreuzkanalartige Struktur 110 sind Senkungen 114 ("Wellentäler") und Erhebungen 116 ("Wellenkämme"), die etwa in einem Winkel α von 45° zur Hauptströmungsrichtung 112 ausgerichtet sind. Die Senkungen 114 und Erhebungen 116 verlaufen dabei unter mehrfacher Richtungsänderung von jeweils etwa 90° zwischen zwei Rändern der Platte 102. Diese sogenannte offene Kreuzkanalstruktur zeichnet sich durch eine gute Verwirbelung der Komponenten des Strömungsmediums bei gleichzeitig sehr geringem Druckabfall und sehr geringer Verstopfungsgefahr durch im Strömungsmedium enthaltene Partikel und Stäube aus.

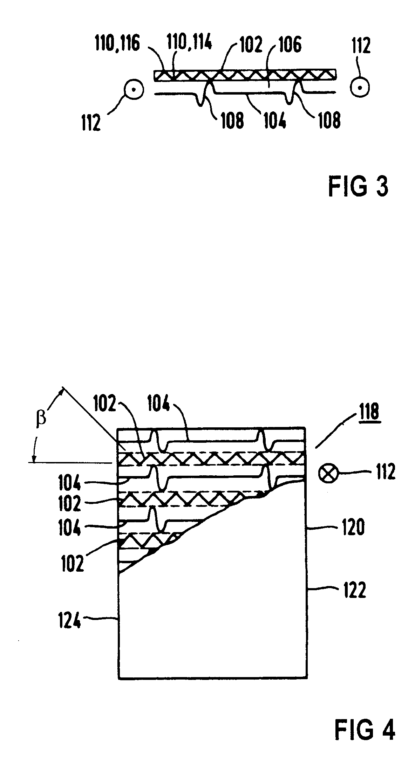

Ein Plattenkatalysator 118, wie er in Figur 4 in Aufsicht auf seine Anströmseite dargestellt ist, ist einfach durch abwechselndes Aufeinanderstapeln der Katalysatorplatten 102, 104 herzustellen. Aufgrund der besonders guten Verwirbelung des Strömungsmediums, beispielsweise eines stickoxidhaltigen Rauchgases einer Verbrennungsanlage, werden in einem solchen Plattenkatalysator 118 die Stickoxide und zuvor in das Rauchgas eingebrachtes Ammoniak besonders oft an die Oberfläche der mit der katalytisch aktiven Masse beschichteten Katalysatorplatten 102, 104 geführt, wodurch die Adsorptionswahrscheinlichkeit für die Stickoxide und das Ammoniak an den Katalysatorplatten 102, 104 erheblich gegenüber Platten mit laminarer Strömung ansteigt. Die der Erfindung zugrundeliegende Aufgabe wird in diesem Ausführungsbeispiel also in vorteilhafter Weise durch eine abwechselnde Anordnung von Platten 104 mit Struktur 108 ausschließlich parallel zur Hauptströmungsrichtung 112 und Platten 102 mit im Winkel α zur Hauptströmungsrichtung 112 verlaufender Struktur 110 gelöst.

Figur 2 zeigt die Katalysatorplatten 102, 104 gemäß der Figur 5 in teilweise aufgebrochener Aufsicht und verdeutlicht nochmals die Anordnung der Strukturen 108, 110 zueinander.

Der in Figur 3 dargestellte Schnitt gemäß der Linie III-III in Figur 2 stellt heraus, daß die Katalysatorplatten 102, 104 in einfacher und vorteilhafter Weise mittels ihrer Strukturen, also der Sicken 108, und der Erhebungen und Senkungen 116 bzw. 114 beabstandet sind. Außerdem wird hier, wie schon in Figur 1, nochmals herausgestellt, daß der Reaktionsraum 116 zwischen den Katalysatorplatten 102, 104 nicht in einzelne Unterräume aufgeteilt ist, wie dies bei Kreuzkanälen im Stand der Technik üblich ist, sondern ein einziger Raum ist, der an den Berührungspunkten der Strukturen 108, 114 punktuell unterbrochen ist.

Figur 4 zeigt ausschnittweise eine Aufsicht auf die Anströmseite eines Plattenkatalysators 118. Dieser Plattenkatalysator 118 umfaßt die aus den Figuren 1 bis 3 bekannten Katalysatorplatten 102, 104, die abwechselnd aufeinander gestapelt und in einen Elementkasten 120 eingebaut sind. Der Elementkasten 120 besteht im Ausführungsbeispiel aus dünnen Blechen aus einem nichtrostenden Stahl und weist an den Längsseiten 122, 124 nicht weiter dargestellte Führungsschienen für die Katalysatorplatten 102, 104 auf, die aufgrund dessen einfach in den Elementkasten einzuschieben sind. Außerdem ist in Figur 4 der bereits erwähnte Winkel β dargestellt.

In der Konsequenz führt die erwähnte Verwirbelung der Komponenten des Strömungsmediums dazu, daß die einzelnen Komponenten des Strömungsmediums erheblich öfter an die katalytisch aktiven Oberflächen der Katalysatorplatten 102, 104 herangeführt werden. Dies führt dazu, daß die Wahrscheinlichkeit eines Dreierstosses zwischen den Reaktanten, hier beispielsweise die Stickoxide und das Ammoniak, und den aktiven Zentren des Katalysators erheblich gegenüber nur laminar durchströmten und aus dem Stand der Technik bekannten Katalysatorplatten gesteigert wird. Die Absorption der Stickoxide und des Ammoniak am katalytischen Material ist besonders vorteilhaft dafür, daß die Stickoxide zusammen mit dem Ammoniak an den katalytisch aktiven Zentren der katalytisch aktiven Schicht der Katalysatorplatten zu Stickstoff und Wasser umgesetzt werden.

Da die Höhe der Strukturen klein gegen die Abmessungen der Katalysatorplatten 102, 104 dimensioniert sind, bleibt auch der Druckabfall, der zwangsläufig durch die Ablenkung des Strömungsmediums von der Hauptströmungsrichtung 112 verursacht wird, innerhalb tolerierbarer Werte. Auch ist die Gefahr einer Verstopfung der Reaktionsräume durch ein beispielsweise stark mit Partikeln und Staub beladenes Rauchgas auszuschließen, da aufgrund der guten mikroskopischen Verwirbelung des Strömungsmediums keine Strömungstoträume in den Reaktionsräumen entstehen.

Ein in der dargestellten Weise ausgestalteter Plattenkatalysator erreicht bei gleichen vorgegebenen Bedingungen aufgrund der Strömungsablenkung wesentlich höhere Abscheidegrade als Plattenkatalysatoren, die fast ausschließlich laminar durchströmt werden. Dies bedeutet umgekehrt auch, daß bei vorgegebenen Abscheidegraden das Katalysatorvolumen eines erfindungsgemäßen Plattenkatalysators erheblich kleiner gewählt werden kann als das Katalysatorvolumen bei einem fast ausschließlich laminar durchströmten Plattenkatalysator gemäß dem Stand der Technik.

## Patentansprüche

1. Plattenkatalysator mit in einer Halterungsvorrichtung (120) übereinander gehaltenen, sich in einer Hauptströmungsrichtung (112) erstreckenden, mit einer katalytisch aktiven Masse beschichteten Platten (102, 104), wobei mindestens ein Reaktionsraum (106) von einer ersten und einer benachbarten zweiten Platte gebildet wird, wobei mindestens die erste Platte eine ungefähr wellenförmige erste Struktur (108, 110) aufweist, die derart schräg zur Hauptströmungsrichtung ausgerichtet ist, daß ein an dieser Struktur entlang strömendes Strömungsmedium aus der Hauptströmungsrichtung abgelenkt wird und wobei die zweite Platte eine parallel zur Hauptströmungsrichtung ausgerichtete Struktur aufweist.

2. Plattenkatalysator nach Anspruch 1,
**dadurch gekennzeichnet,** daß - senkrecht zur Hauptströmungsrichtung gesehen - die Ausrichtung der ersten Struktur keine Richtungsänderung aufweist.

3. Plattenkatalysator nach Anspruch 1 oder 2,
**dadurch gekennzeichnet,** daß - in Hauptströmungsrichtung gesehen - die Ausrichtung der ersten Struktur mindestens eine Richtungsänderung aufweist.

4. Plattenkatalysator nach einem der vorhergehenden Ansprüche,
**dadurch gekennzeichnet,** daß in der Halterungseinrichtung jeweils alternierend eine erste und eine zweite Platte übereinander gehalten sind.

5. Plattenkatalysator nach einem der vorhergehenden Ansprüche,
**dadurch gekennzeichnet,** daß die beiden Platten mittels der Struktur voneinander beabstandet sind.

## Claims

1. Plate-type catalyst having plates (102, 104) which are held one on top of the other in a supporting device (120), extend in a main flow direction (112) and are coated with a catalytically active composition, with at least one reaction chamber (106) being formed by a first plate and an adjacent second plate, with at least the first plate having an approximately waved first structure (108, 110), which is aligned so as to be inclined with respect to the main flow direction in such a way that a flow medium which flows along this structure is deflected from the main flow direction, and with the second plate having a structure which is aligned in parallel with the main flow direction.

2. Plate-type catalyst according to claim 1, characterised in that - seen at right angles to the main flow direction - the alignment of the first structure has no change of direction.

3. Plate-type catalyst according to claim 1 or 2, characterised in that - seen in the main flow direction - the alignment of the first structure has at least one change of direction.

4. Plate-type catalyst according to one of the preceding claims, characterised in that, alternately in each case, a first plate and a second plate are held one on top of the other in the supporting device.

5. Plate-type catalyst according to one of the preceding claims, characterised in that the two plates are distanced from each other by means of the structure.

## Revendications

1. Pot catalytique à plaques comportant des plaques (102, 104) revêtues d'une masse active catalytiquement, s'étendant suivant une direction (112) de courant principale et maintenues les unes au dessus des autres dans un dispositif (120) de fixation, dans lequel au moins une zone (106) de réaction est formée par une première et une deuxième plaques voisines, au moins la première plaque comportant une première structure (108, 110) à peu près ondulée, qui est inclinée par rapport à la direction de courant principale de sorte qu'un fluide, qui s'écoule le long de cette structure, est dévié par rapport à la direction de courant principale et la deuxième plaque comportant une structure orientée parallèlement à la direction de courant principale.

2. Pot catalytique à plaques suivant la revendication 1, caractérisé en ce que l'orientation de la première structure ne comporte pas de modification de direction, vu suivant la perpendiculaire à la direction de courant principale.

3. Pot catalytique à plaques suivant la revendication 1 ou 2, caractérisé en ce l'orientation de la première structure comprend au moins une modification de direction, vu suivant la direction de courant principale.

4. Pot catalytique à plaques suivant l'une des revendications précédentes caractérisé en ce qu'une première et une deuxième plaque sont maintenues en alternance l'une au dessus de l'autre dans le dispositif de fixation.

5. Pot catalytique à plaques suivant l'une des revendications précédentes caractérisé en ce que les deux plaques sont maintenues à distance l'un de l'autre au moyen de la structure.
